# EUROPÄISCHE PATENTSCHRIFT

(11) **EP 1 280 675 B1**
(45) Veröffentlichungstag und Bekanntmachung des Hinweises auf die Patenterteilung: **22.03.2006**
(21) Anmeldenummer: 01938211.8
(22) Anmeldetag: 09.05.2001
(51) Int. Cl.: B60J 10/02

(54) **ABDICHTUNGS-ANORDUNG FÜR FAHRZEUGSCHEIBEN**
SEALING SYSTEM FOR VEHICLE WINDOW PANES
ENSEMBLE JOINT D'ETANCHEITE POUR VITRES DE VEHICULES

(30) Priorität: 12.05.2000 DE 20008555 U
(43) Veröffentlichungstag der Anmeldung: 05.02.2003
(73) Patentinhaber: Elkamet Kunststofftechnik GmbH, 35216 Biedenkopf (DE)
(72) Erfinder: ORTMÜLLER, Michael, 35232 Dautphetal-Herzhausen (DE); GRÜNDEL, Günter, 35216 Biedenkopf-Dexbach (DE)
(74) Vertreter: Olbricht, Karl Heinrich
(86) Internationale Anmeldenummer: PCT/EP2001/005290
(87) Internationale Veröffentlichungsnummer: WO 2001/085481

(56) Entgegenhaltungen:
- EP-A- 0 945 296
- DE-A- 3 606 566
- DE-A- 3 702 555
- DE-A- 4 141 813
- FR-A- 2 754 503
- GB-A- 2 093 106
- US-A- 4 219 230
- US-A- 4 546 986
- US-A- 5 935 356

## Beschreibung

Die Erfindung betrifft eine Abdichtungs-Anordnung für Fahrzeugscheiben gemäß dem Oberbegriff von Anspruch 1.

In DE 36 06 566 C2 ist eine Halterung für die Windschutzscheibe eines Kraftfahrzeugs beschrieben, bei der ein zweigeteilter Rahmen die Scheibe in lösbarer Verbindung von außen und innen faßt. Es gibt auch U-förmige Profile, die den unteren Scheibenrand umgreifen und eine Verhakung für eine darunter angeordnete Wasserkasten-Abdeckung haben bzw. bilden. Üblich ist es, das U-Profil oder einen abgekröpften Profilstreifen z.B. nach DE 689 11 385 T2 zwecks fester Verbindung mit der Scheibe von hinten (innen) durch einen Kleberstrang, z.B. eine Polyurethanraupe, zu verkleben.

Aus dem nach voröffentlichten Dokument WO 01/45974 ist ebenfalls eine Abdichtungsanordnung für Fahrzeugscheiben bekannt.

Damit der untere Außenschenkel des Profilrahmens von den Scheibenwischem nicht überfahren werden muß, befindet sich deren Ruhestellung herkömmlich im unteren Scheibenbereich oberhalb des Profils. Das beeinträchtigt unter anderem den Luftwiderstandsbeiwert, der von der Fahrzeug-Geschwindigkeit quadratisch abhängt, wodurch der Kraftstoffverbrauch vor allem bei schneller Fahrt erheblich ansteigt. Auch der Geräuschpegel wird mitbeeinflußt.

Man ist deshalb bestrebt, die Scheibenwischer tiefer zu legen. Weil ein abdichtender Übergang zwischen dem unteren Scheibenrand und der Wasserkasten-Abdeckung unerläßlich ist, muß aber für beschädigungsfreien Wischerbetrieb gesorgt werden.

Aufgabe der Erfindung ist es, unter Überwindung der Nachteile des Standes der Technik mit möglichst einfachen und wirtschaftlichen Mitteln eine verbesserte Abdichtungs-Anordnung für Fahrzeug-Frontscheiben zu schaffen. Sie soll - bei weiterhin zugänglicher Abdeckung eines darunter befindlichen Wasserkastens - außerdem eine versenk- und anhebbare Unterbringung einer zugehörigen Scheibenwischer-Einrichtung ermöglichen.

Hauptmerkmale der Erfindung sind im kennzeichnenden Teil von Anspruch 1 angegeben. Ausgestaltungen sind Gegenstand der Ansprüche 2 bis 21.

Bei einer Abdichtungs-Anordnung für Fahrzeugscheiben, insbesondere für den unteren Bereich einer Kraftfahrzeug-Windschutzscheibe, mit einem an deren unterem Rand mit einer Anlagefläche befestigbaren Profilkörper, welcher im Querschnitt hakenförmig ausgebildet ist und einen Federschenkel hat, der mit einer Rippe einer Wasserkasten-Abdeckung abdichtend verrastbar ist, 1 wobei der Profilkörper wenigstens eine Dichtlippe aufweist, die zwischen der Scheiben-Unterkante und dem oberen Rand der Wasserkasten-Abdeckung einpaßbar ist und mit der Außenfläche der Scheibe sowie mit der Außenfläche der wasserkasten-Abdeckung im wesentlichen bündig abschließt, sieht die Erfindung gemäß Anspruch 1 vor, dass der Profilkörper eine Keil-oder Tragrippe hat, die einen elastischen Klemm- und/oder Stützkörper zwischen dem unteren Rand der Windschutzscheibe und der Rippe der Wasserkasten-Abdeckung bildet, wobei die Rippe von letzterer nach innen vorspringt und in verrasteter Position durch den nach außen vorspringenden Federschenkel umschlossen ist. Dadurch ist es möglich, daß die Scheibenwischer in Ruhestellung über das untere Ende der Windschutzscheibe hinweg unter die Motorhaube eintauchen können, wobei sie unterhalb des Scheibenrandes auf der Wasserkasten-Abdeckung zu liegen kommen. Diese läßt sich wie sonst auch abnehmen, z.B. um ein Pollenfilter zu wechseln. Der bündige Dichtlippen-Abschluß außen gestattet eine freie Bewegung der Scheibenwischer. Sie fahren in Aus-Stellung nach unten, wogegen sie im Gebrauch, ob bei Intervall- oder Dauerbetrieb, natürlich an der Scheibe bleiben. An ihr ist der Profilkörper zuverlässig befestigt, und zwar nur von innen bzw. hinten. Auch ist damit die Dichtlippe von innen her stets sicher gehalten, wobei der Klemm- bzw. Stützkörper einen wichtigen Beitrag zur Gesamt-Abdichtung sowie Gesamt-Stabilität leistet.

Besonders vorteilhaft ist die Weiterbildung von Anspruch 2, wonach die Dichtlippe einen zumindest teilweise weichelastisch verformbaren Körper hat oder bildet, der zumindest abschnittsweise im Querschnitt keil- oder quaderförmig ausgebildet ist, beispielsweise aus oder mit einem extrudierten Profil-Flachmaterial, einem geschlossenzelligen Schaumkeil o.dgl. Hiermit ist ein Toleranzausgleich zwischen dem unteren Scheibenrand und der Wasserkasten-Abdeckung besonders gut erzielbar.

Gemäß Anspruch 3 schließt die Dichtlippe unterhalb der im wesentlichen ebenen Anlagefläche des Profilkörpers daran winkelig an, insbesondere etwa rechtwinkelig oder nach außen vorstehend. Dank dieser Formgestaltung wird der untere Scheibenrand von hinten bzw. innen her satt anliegend untergriffen. Dazu trägt auch Anspruch 4 bei, wonach die Dichtlippe wenigstens eine gesondert ausgebildete Wölb- oder Nasenkante aufweist. Man erzielt dadurch eine stets optimale und dauerhafte Dichtwirkung.

Im Einklang mit Anspruch 5 lassen sich die verschiedensten Ausgestaltungen realisieren, indem man den. Profilkörper und/oder die Dichtlippe ein- oder mehrteilig ausbildet, wobei der Profilkörper und/oder die Dichtlippe aus einer Materialkombination bestehen, namentlich in Form eines Verbundkörpers aus weichem und hartem Material. So kann beispielsweise die Dichtlippe außen weich und innen hart sein; sie kann speziell innen massiv oder hohl-hart und außen weich sein. Andere Varianten sind ebenfalls möglich; beispielsweise kann ein integraler Weichkörper die Dichtlippe bilden, die auf dem steiferen Profilkörper stoffschlüssig befestigt ist, der seinerseits einen hochelastischen Kem aufweisen kann.

Der Profilkörper hat nach Anspruch 6 einen Federschenkel, der mit einen elastischen versteifungs-Einlage versehen ist.

Anspruch 7 sieht vor, daß die Tragrippe im wesentlichen keil-förmig, T-förmig oder U-förmig ausgebildet ist, je nach erforderlicher Stütz- oder Tragfunktion. Darüber hinaus weist die Tragrippe laut Anspruch 8 eine ebene und/oder gewölbte Fläche auf, mit welcher Innenflächen der Dichtlippe einstückig oder fest verbunden sind.

Für zusätzliche Stabilität innerhalb des Profilkörpers sorgt die Ausgestaltung von Anspruch 9, indem nämlich die Keil- oder Tragrippe mit einer eigenen elastischen Versteifungs-Einlage versehen ist. Das gesamte Profil ist daher außerordentlich hoch belastbar und dauerhaft stabil. Eine weitere Optimierung der Dichtwirkung erzielt man, wenn gemäß Anspruch 10 die Fläche der Keil- oder Tragrippe wenigstens eine weitere Dichtlippe trägt, die an der Kraftfahrzeug-Windschutzscheibe oder der Wasserkasten-Abdeckung dichtend anliegt, wobei die erste Dichtlippe und die weitere Dichtlippe(n) laut Anspruch 11 miteinander verbunden oder einstückig sein können.

Sehr günstig ist es, wenn die Anlagefläche des Profilkörpers gemäß Anspruch 12 in zumindest einem Teilflächen-Bereich mit einer Stütz- oder Haftschicht an der Frontscheibe anliegt, wobei die Stütz- oder Haftschicht nach Anspruch 13 einen zumindest teilweise weichelastisch verformbaren Körper hat oder bildet. Der Profilkörper ist dadurch permanent fest mit der Frontscheibe verbunden, was sich günstig auf die Montage am Kraftfahrzeug auswirkt. Eine kostengünstige Befestigung des Profilkörpers gewährleistet Anspruch 14, wonach die Stütz- oder Haftschicht selbstklebend und/oder gegebenenfalls perforiert ausgebildet sein kann, was zur gesamten Stabilität und Festigkeit beiträgt.

Gemäß Anspruch 15 weist die Anlagefläche des Profilkörpers zueinander höhenversetzte Berührungsbereiche auf, zwischen denen die Stütz- bzw. Haftschicht eingeschlossen ist. Anspruch 16 sieht vor, daß ein Teilflächen-Bereich von der Scheibe nach innen absteht, bevorzugt in Form einer flachen Auskehlung, an der ein Klebeband satt anliegt. Die Anlagefläche des Profilkörpers kann laut Anspruch 17 in dem bzw. jedem Teilflächen-Bereich perforiert sein, namentlich mit wenigstens einer Lochreihe. Rückseitig aufgebrachter Kleber kann so problemlos bis an die Scheibe gelangen. Eine weitere Verklebung am oberen Rand des Profilkörpers sorgt bei Bedarf für dessen zusätzliche Sicherung.

Die Weiterbildung der Erfindung nach Anspruch 18 sieht vor, daß der Profilkörper rückseitig zur Abstützung an einem Karosseriebestandteil wenigstens eine Stützrippe und/oder eine Pufferleiste aufweist, die gemäß Anspruch 19 mit dem Profilkörper einstückig sein kann. Konstruktiv ist es hierbei günstig, wenn zumindest eine Stützrippe laut Anspruch 20 die Pufferleiste trägt.

Zusätzlich oder alternativ kann der Profilkörper in der Ausbildung von Anspruch 21 an seinem oberen Schenkelende mit einer nasenförmigen Verbreiterung oder einem Hinterschnitt versehen sein. Dies ermöglicht eine zusätzliche, besonders solide Verankerung des Profilkörpers an der Frontscheibe.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Darin zeigen:
- Fig. 1: eine Querschnittsansicht eines Profilkörpers,
- Fig. 2: eine schematisierte Einbau-Querschnittsansicht des Profilkörpers von Fig. 1,
- Fig. 3: eine Teil-Schrägansicht eines perforierten Profilkörpers,
- Fig. 4: eine schematisierte Einbau-Querschnittsansicht einer anderen Ausführungsform eines Profilkörpers und
- Fig. 5: eine schematisierte Einbau-Querschnittsansicht einer noch anderen Ausführungsform eines Profilkörpers.

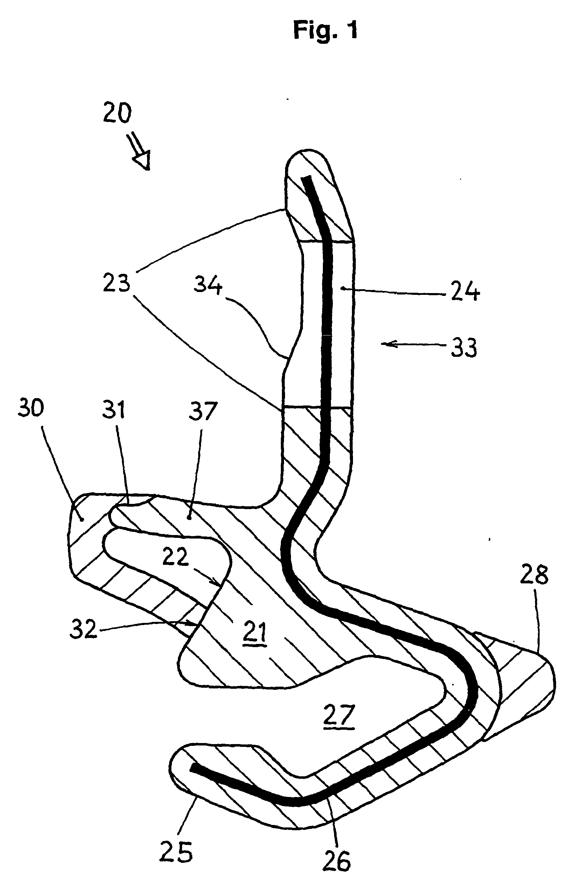

Man erkennt in Fig. 1 einen stark vergrößert im Querschnitt dargestellten Profilkörper 20, der in einem mittleren Bereich eine Tragrippe 21 mit einer Schrägfläche 22 aufweist und darüber eine geteilte Anlagefläche 23 hat. Der Profilkörper 20 besteht aus einem oder mehreren Kunststoffen jeweils geeigneter Härte, beispielsweise Polypropylen (PP), Polyvinylchlorid (PVC), Acrylnitril-Butadien-Styrol-Copolymeren (ABS) o.dgl. und/oder aus Kombinationen davon. Er kann eine Versteifungs-Einlage 26 haben, um einen Federschenkel 25 im unteren Bereich elastisch abzustützen. Das Material der Einlage 26 kann ein Aluminium- oder Stahlband von z.B. 0,2 mm bis 0,4 mm Dicke sein. An einem Biegungs-Übergang zwischen dem mittleren Teil und einem unteren Bereich ist eine Pufferleiste 28 aus einer weicheren Komponente vorgesehen.

An der Vorderseite des Profilkörpers 20 (links in Fig. 1) hat die als Keilrippe ausgebildete Tragrippe 21 eine Schrägfläche 22, von der eine hohle Dichtlippe 30 quer absteht. Sie kann mit zumindest einer Innenfläche 32 an der Schrägfläche 22 verankert sein. Im Ausführungsbeispiel der Fig. 1 überlappt die Dichtlippe 30 in ihrem oberen Bereich einen Vorsprung 37, der vom Mittelteil der Keilrippe 21 nach vom bzw. außen absteht. Auf diese Weise sind an einer Hart/Weich-Grenze 31 Materialien unterschiedlicher Art bzw. Härte miteinander einstückig oder stoffschlüssig verbunden.

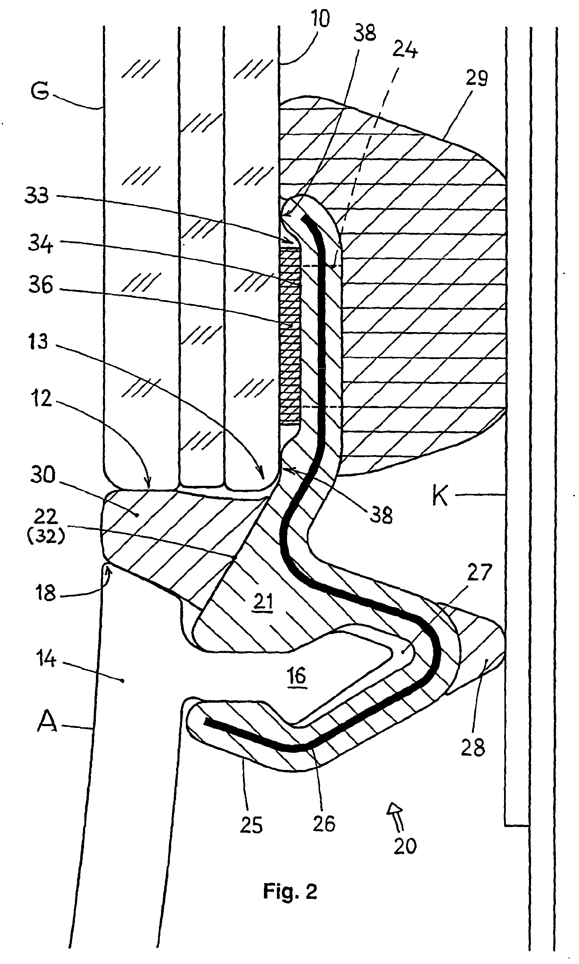

Der Einbauzustand geht aus Fig. 2 hervor. Eine Windschutz- oder Frontscheibe 10 ist am unteren Rand 12 mit der Dichtlippe 30 in kraft- und formschlüssigem Kontakt In diesem Beispiel ist die Dichtlippe 30 als Massivkörper aus einem Weichmaterial ausgebildet, dessen Unterseite an der Oberkante 18 einer Wasserkasten-Abdeckung 14 dicht anliegt. Das Weichmaterial ist bevorzugt ein thermoplastisches Elastomer (TPE), ein Moosgummi oder ein anderes geeignetes Material.

Abweichend von der gezeichneten Version kann die Dichtlippe 30 allerdings auch in diesem Falle (wie nach Fig. 1) hohl sein. Man erkennt, daß die Außenfläche G der Scheibe 10 mit dem Außenbereich der Dichtlippe 30 und der Außenfläche A der Wasserkasten-Abdeckung 14 im wesentlichen bündig abschließt bzw. fluchtet.

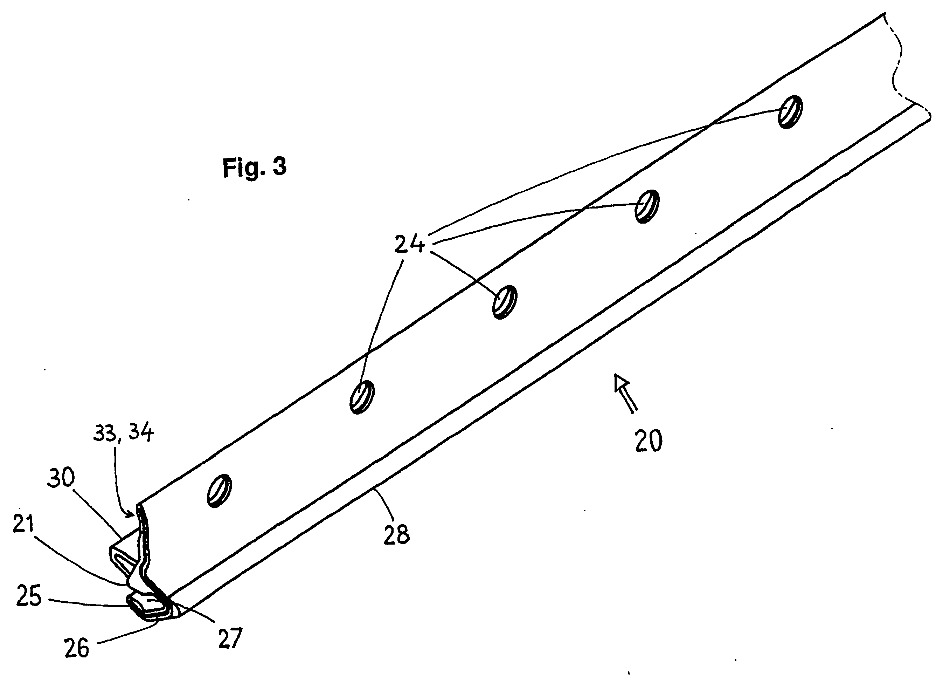

An der Rückseite der Scheibe 10 ist der Profilkörper 20 mit einer ihn übergreifenden Kleberaupe 29 befestigt, die ihrerseits innen an der Karosserie K flächig anliegt. Der auch bei dieser Ausführungsform hakenförmig gekrümmte Profilkörper 20 liegt mit Berührungsbereichen 38 ober- und unterhalb eines mittleren Teilflächen-Bereichs 33 unmittelbar an der Rückseite der Scheibe 10 an. Ihr steht mit geringem Abstand eine Auskehlung 34 im mittleren Teilflächen-Bereich 33 gegenüber, der mit einer Perforation in Form einer Lochreihe 24 (Fig. 1) versehen sein kann. Zwei oder mehr Lochreihen 24 sind ebenfalls möglich; femer kommen vom Kreisloch (siehe Fig. 3) abweichende Lochformen in Betracht. Durch die Perforation 24 gelangt noch nicht gehärteter Kleber von der Raupe 29 bis an die Rückseite der Scheibe 10. Bei der Ausführung gemäß Fig. 2 füllt ein doppelseitiges, gegebenenfalls perforiertes Klebeband 36 die Auskehlung 34 aus, so daß praktisch der gesamte obere Bereich des Profilkörpers 20 flächig an der Rückseite der Scheibe 10 haftet.

Der Übergang vom oberen zum mittleren Bereich des Profilkörpers 20 ist als Kehle ausgebildet, welche die hintere Unterkante 13 der Scheibe 10 untergreift. Während die an diese Kehle anschließende Keilrippe 21 im Beispiel der Fig. 2 mit der Schrägfläche 22 nach vom bzw. außen vorspringt geht die Keilrippen-Unterseite nach hinten bzw. innen in Form einer Ausbuchtung 27 zurück, deren inneres Ende der Pufferleiste 28 gegenüberliegt. Daran schließt der wieder nach vom bzw. außen vorspringende Federschenkel 25 an. Mit ihm übergreift der Profilkörper 20 eine Rippe 16 der Wasserkasten-Abdeckung 14, wobei die Teile 16 und 21/25 mit Hinterschneidungen versehen sind, welche Schnapprasten bilden. Die Versteifungs-Einlage 26 folgt allgemein der Hakenform des Profilkörpers 20, kann aber auch kürzer als gezeichnet sein.

Fig. 3 veranschaulicht den Profilkörper 20 als Ganzes. Man erkennt ohne weiteres, daß er eine stabile Leiste darstellt, die sich bequem handhaben läßt. Sie kann problemlos auf passendes Maß abgelängt und entsprechend der Scheibengestalt geformt werden,

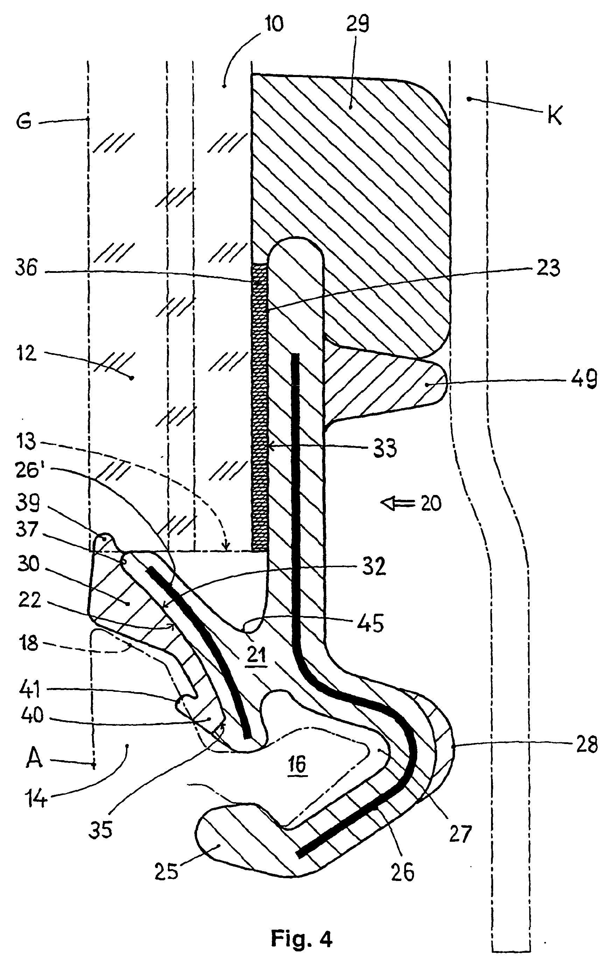

In einer anderen Ausführungsform des Profilkörpers 20 (Fig. 4) ist die Tragrippe 21 im Querschnitt etwa T-förmig ausgebildet. Sie bildet zwischen dem unteren Rand 12 der Windschutzscheibe 10 und der nach innen vorspringenden Rippe 16 der Wasserkasten-Abdeckung 14 einen Klemm- bzw. Stützkörper, der auf einer gewölbten Schrägfläche 22 eine keilförmige Dichtlippe 30 aus Weichmaterial trägt. Letztere liegt mit einer Nasenkante 39 kraft- und formschlüssig an der Unterkante 13 der Windschutzscheibe 10 an und wird dabei zwischen dieser und der Oberkante 18 der Wasserkasten-Abdeckung 14 derart verpreßt, daß die Außenfläche der Dichtlippe 30 bündig mit den Außenflächen G, A der Scheibe 10 bzw. der Wasserkasten-Abdeckung 14 abschließt. Im Bereich der Rippe 16 bildet die Schrägfläche 22 eine nach vom gerichtete Stufe 35, an der eine weitere Dichtlippe 40 ansetzt, welche mit einer vorspringenden Nasenkante 41 das Profil 20 gegen die Wasserkasten-Abdeckung 14 abdichtet. Die Dichtlippe 30 und die weitere Dichtlippe 40 liegen formschlüssig auf der Schräg- bzw. Wölbfläche 22 des Profilkörpers 20 auf und sind bevorzugt miteinander einstückig.

Man erkennt in Fig. 4, daß der obere Vorsprung bzw. Arm 37 der Tragrippe 21 und der obere Mittelbereich des Profilkörpers 20 eine Höhlung 45 bilden, wodurch der sich gegen die Scheibe 10 abstützende Vorsprung 37 elastisch nachgeben kann. Die Tragrippe 21 und die Dichtlippe 30 können mithin Toleranzen zwischen der Scheibe 10 und dem Wasserkasten 10 bequem ausgleichen. Eine Versteifungseinlage 26' innerhalb der T-förmigen Tragrippe 21 erhöht die Stabilität des Profils 20 und die Tragfähigkeit des Vorsprungs bzw. Arms 37.

Die Festlegung des Profilkörpers 20 erfolgt in der Ausbildung von Fig. 4 an der Rückseite der Scheibe 10 mittels eines doppelseitigen Klebebandes 36, das auf der insgesamt ebenen Anlagefläche 23 des Profilkörpers 20 aufgebracht ist. Femer wird der Profilkörper 20 endseitig von einer Kleberaupe 29 überdeckt, die ihrerseits flächig an der Karosserie K anliegt. Perforationslöcher 24 in dem Profilkörper 20 und/oder dem Klebeband 36, das auch aus Weichmaterial bestehen kann, sorgen dafür, daß noch nicht gehärteter Kleber von der Raupe 29 bis an die Rückseite der Scheibe 10 gelangen kann, was die Festigkeit weiter erhöht. Zwingend erforderlich sind die Löcher 24 jedoch nicht.

Alternativ oder ergänzend kann der an der Scheibe anliegende Schenkel des Profilkörpers 20 - wie in dem Ausführungsbeispiel von Fig. 2 - mit einer Auskehlung 34 versehen sein, in die das doppelseitige Klebeband 36 eingelegt wird. Im Bereich des unteren Randes 12 der Windschutzscheibe 10 stützt sich der Profilkörper 20 rückseitig mit einer Stützrippe 49 an dem Karosseriebestandteil K ab. Weil die Abstützung durch die Stützrippe 49 vollkommen ausreicht, um die notwendige Stabilität dauerhaft zu gewährleisten, muß die Pufferleiste 28 die Karosserie K nicht unbedingt berühren; sie kann sogar vollständig entfallen, so daß der Profilkörper 20 nur von der Kleberaupe 29 auf Distanz gehalten wird.

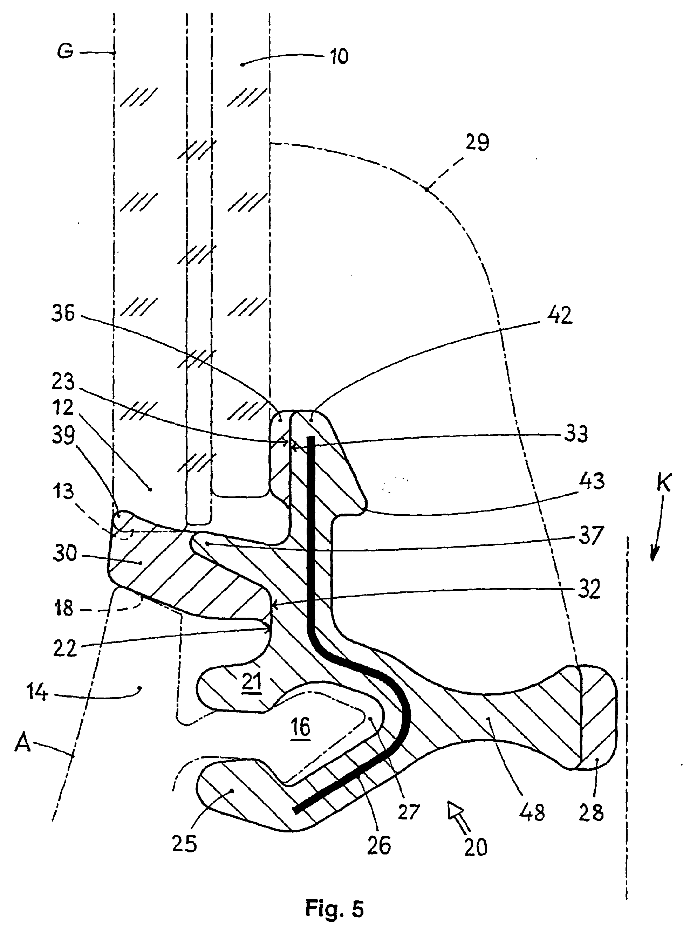

Eine kompaktere Ausführungsform eines Profilkörpers 20 ist in Fig. 5 dargestellt. Hier hat die insgesamt U-förmig ausgebildete Tragrippe 21 eine ebenfalls U-förmige Fläche 22. Die Dichtlippe 30 ist etwa quaderförmig und übergreift den Vorsprung 37 des Tragkörpers 21. Dieser liegt nicht an der Unterkante 13 der Scheibe 10 an, so daß der Toleranzausgleich zwischen der Scheibe 10 und dem Wasserkasten 14 direkt von der Dichtlippe 20 übernommen wird. Die Nasenkante 39 sorgt wiederum für eine zuverlässige Abdichtung, wobei die Außenfläche der Dichtlippe 30 bündig mit den Außenflächen G, A von Scheibe 10 und Wasserkasten 14 abschließt.

Der mittels einer gegebenenfalls selbstklebenden Weichauflage 36 an der Rückseite der Scheibe 10 anliegende Schenkel des Profilkörpers 20 ist im Vergleich zu anderen Ausführungsformen deutlich kürzer ausgebildet. Er ist im Bereich seines oberen Endes 42 mit einer Hinterschneidung oder nasenförmigen Verbreiterung versehen. Letztere wird von einer (nur schematisch angedeuteten) Kleberaupe 29 überdeckt, die sich rückseitig am Profilkörper 20 bis in dessen unteren Bereich erstreckt. Dort ist - bevorzugt etwa auf der Höhe der Rastrippe 16 - eine Stützrippe 48 ausgebildet, die den gesamten Profilkörper 20 über eine Pufferleiste 28 gegen die Karosserie K abstützt. Die Kleberaupe 29 muß die Karosserie K nicht berühren.

Die Erfindung ist nicht auf eine der vorbeschriebenen Ausführungsformen beschränkt, sondern vielfältig abwandelbar. Insbesondere lassen sich über die direkt beschriebenen Ausführungsformen hinaus verschiedenste Kombinationen von Werkstoffen für die Dichtlippe 30 und den Profilkörper 20 zusammenstellen. Geeignete Materialien sind beispielsweise PP, PVC, PVC/ABS oder andere thermoplastisch verarbeitbare Kunststoffe.

Zusammenfassend ist festzuhalten, daß eine bevorzugte Abdichtungs-Anordnung für Fahrzeugscheiben 10 einen an deren unterem Rand 12 an einer Anlagefläche 23 befestigbaren Profilkörper 20 aufweist, der im Querschnitt hakenförmig ausgebildet ist und einen Federschenkel 25 aufweist. Dieser ist mit einer nach innen vorspringenden Rippe 16 einer Wasserkasten-Abdeckung 14 abdichtend verrastbar und hat eine Dichtlippe 30, die zwischen der Scheiben-Unterkante 13 und dem oberen Rand 18 der Wasserkasten-Abdeckung 14 einpaßbar ist und mit deren Außenflächen A, G im wesentlichen bündig abschließt. Die Dichtlippe 30 steht mit einer Tragrippe 21, die keilförmig, T-förmig oder U-förmig sein kann, nach außen vor, wodurch zwischen dem unteren Scheibenrand 12 und der Rippe 16 ein elastischer Klemm- und Stützkörper gebildet ist. Mit einer Schräg- oder Formfläche 22 ist zumindest eine Innenfläche 32 der Dichtlippe 30 einstückig oder fest verbunden, die einen insbesondere weich-elastisch verformbaren, bevorzugt keil- oder quaderförmigen Wölbkörper hat oder bildet. Der Profilkörper 20 und/oder die Dichtlippe 30 kann aus einer Materialkombination bestehen, z. B. in Form eines Verbundkörpers, der außen weich und innen hart ist. Versteifungseinlagen 26, 26' erhöhen die Elastizität. Zweckmäßig weist die Anlagefläche 23 des Profilkörpers 20 zueinander höhenversetzte Berührungsbereiche 38 auf. Dazwischen kann an einem - gegebenenfalls perforierten - Teilflächen-Bereich 33 eine Haftschicht eingeschlossen sein, z:B. ein satt in einer Auskehlung 34 anliegendes, doppelseitig beschichtetes Klebeband 36, das auch perforiert sein kann. Nach innen gerichtete Stützrippen 48, 49 tragen zur Positions-Sicherung und mit einer Pufferleiste 28 zum nachgiebigen Abfangen von Verschiebungs-Belastungen bei.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- A: Außenfläche (von 14)
- G: Außenfläche (von 10)
- K: Karosserie[bestandteil]

- 10: Windschutzscheibe
- 12: unterer Rand
- 13: Unterkante
- 14: Wasserkasten-Abdeckung
- 16: Rippe
- 18: Oberkante
- 20: Profilkörper
- 21: Tragrippe / Keilrippe
- 22: (Schräg-)Fläche
- 23: Anlagefläche
- 24: Lochreihe
- 25: Federschenkel
- 26, 26': Versteifungs-Einlage
- 27: Ausbuchtung
- 28: Pufferleiste
- 29: Kleberaupe
- 30: Dichtlippe
- 31: Hart/Weich-Grenze
- 32: Innenflächen
- 33: Teilflächen-Bereich
- 34: Auskehlung
- 35: Stufe
- 36: Klebeband
- 37: Vorsprung
- 38: Berührungsbereiche
- 39: Nasenkante
- 40: weitere Dichtlippe
- 41: Nasenkante
- 42: oberes Ende
- 43: Hinterschneidung / Verbreiterung
- 45: Höhlung
- 48, 49: Stützrippen

## Patentansprüche

1. Abdichtungs-Anordnung für Fahrzeugscheiben, insbesondere für den unteren Bereich einer Kraftfahrzeug-Windschutzscheibe (10), mit einem an deren unterem Rand (12) mit einer Anlagefläche (23) befestigbaren Profilkörper (20), welcher im Querschnitt hakenförmig ausgebildet ist und einen Federschenkel (25) hat, der mit einer Rippe (16) einer Wasserkasten-Abdeckung (14) abdichtend verrastbar ist, wobei der Profilkörper (20) wenigstens eine Dichtlippe (30) aufweist, die zwischen der Scheiben-Unterkante (13) und dem oberen Rand (18) der Wasserkasten-Abdeckung (14) einpaßbar ist und mit der Außenfläche (G) der Scheibe (10) sowie mit der Außenfläche (A) der Wasserkasten-Abdeckung (14) im wesentlichen bündig abschließt, wobei der Profilkörper (20) eine Keil- oder Tragrippe (21) hat, die einen elastischen Klemm- und/oder Stützkörper zwischen dem unteren Rand (12) der Windschutzscheibe (10) und der Rippe (16) der Wasserkasten-Abdeckung (14) bildet, wobei die Rippe (16) von letzterer nach innen vorspringt in verrasteter Position durch den nach außen vorspringenden Federschenkel (25) umschlossen ist.

2. Abdichtungs-Anordnung nach Anspruch 1, **dadurch gekennzeichnet, daß** die Dichtlippe (30) einen zumindest teilweise weichelastisch verformbaren Körper hat oder bildet, der zumindest abschnittsweise im Querschnitt keil- oder quaderförmig ausgebildet ist.

3. Abdichtungs-Anordnung nach Anspruch 1 oder 2, **dadurch gekennzeichnet, daß** die Dichtlippe (30) unterhalb der im wesentlichen ebenen Anlagefläche (23) des Profilkörpers (20) daran winkelig, insbesondere nach außen vorstehend anschließt.

4. Abdichtungs-Anordnung nach einem der Ansprüche 1 bis 3, **dadurch gekennzeichnet , daß** die Dichtlippe (30) wenigstens eine gesondert ausgebildete Wölb-oder Nasenkante (39; 41) aufweist.

5. Abdichtungs-Anordnung nach einem der Ansprüche 1 bis 4, **dadurch gekennzeichnet, daß** der Profilkörper (20) und/oder die Dichtlippe (30) ein- oder mehrteilig ausgebildet sind, wobei der Profilkörper (20) und/oder die Dichtlippe (30) aus einer Materialkombination bestehen, namentlich in Form eines Verbundkörpers aus weichem und hartem Material.

6. Abdichtungs-Anordnung nach einem der Ansprüche 1 bis 5, **dadurch gekennzeichnet, daß** der Federschenkel (25) mit einer elastischen Versteifungs-Einlage (26) versehen ist.

7. Abdichtungs-Anordnung nach Anspruch 6, **dadurch gekennzeichnet, daß** die Tragrippe (21) im wesentlichen keilförmig, T-förmig oder U-förmig ausgebildet ist.

8. Abdichtungs-Anordnung nach Anspruch 6 oder 7, **dadurch gekennzeichnet, daß** die Keil- oder Tragrippe (21) eine ebene und/oder gewölbte Fläche (22) aufweist, mit welcher Innenflächen (32) der Dichtlippe (30) einstückig oder fest verbunden sind.

9. Abdichtungs-Anordnung nach einem der Ansprüche 6 bis 8, **dadurch gekennzeichnet, daß** die Keil- oder Tragrippe (21) mit einer elastischen Versteifungs-Einlage (26') versehen ist.

10. Abdichtungs-Anordnung nach einem der Ansprüche 6 bis 9, **dadurch gekennzeichnet, daß** die Fläche (22) der Keil- oder Tragrippe (21) wenigstens eine weitere Dichtlippe (40) trägt, welche dichtend an der Kraftfahrzeug-Windschutzscheibe (10) oder der Wasserkasten-Abdeckung (14) anliegt.

11. Abdichtungs-Anordnung nach Anspruch 10, **dadurch gekennzeichnet, daß** die Dichtlippen (30, 40) miteinander verbunden oder einstückig sind.

12. Abdichtungs-Anordnung nach wenigstens einem der Ansprüche 1 bis 11, **dadurch gekennzeichnet, daß** die Anlagefläche (23) des Profilkörpers (20) in zumindest einem Teilflächen-Bereich (33) mit einer Stütz- oder Haftschicht (36) an der Frontscheibe (10) anliegt.

13. Abdichtungs-Anordnung nach Anspruch 12, **dadurch gekennzeichnet, daß** die Stütz- oder Haftschicht (36) einen zumindest teilweise weichelastisch verformbaren Körper hat oder bildet.

14. Abdichtungs-Anordnung nach Anspruch 12 oder 13, **dadurch gekennzeichnet, daß** die Stütz- oder Haftschicht (36) selbstklebend und/oder perforiert ausgebildet ist.

15. Abdichtungs-Anordnung nach einem der Ansprüche 12 bis 14, **dadurch gekennzeichnet, daß** die Anlagefläche (23) des Profilkörpers (20) zueinander höhenversetzte Berührungsbereiche (38) aufweist, zwischen denen die Stütz- bzw. Haftschicht (36) eingeschlossen ist.

16. Abdichtungs-Anordnung nach einem der Ansprüche 12 bis 15, **dadurch gekennzeichnet, daß** ein Teilflächen-Bereich (33) von der Scheibe (10) nach innen absteht, - bevorzugt in Form einer flachen Auskehlung (34), an der ein Klebeband (36) satt anliegt.

17. Abdichtungs-Anordnung nach einem der Ansprüche 12 bis 16, **dadurch gekennzeichnet, daß** die Anlagefläche (23) des Profilkörpers (20) in dem bzw. jedem Teilflächen-Bereich (33) perforiert ist, namentlich mit wenigstens einer Lochreihe (24).

18. Abdichtungs-Anordnung nach einem der Ansprüche 1 bis 17, **dadurch gekennzeichnet, daß** der Profilkörper (20) rückseitig zur Abstützung an einem Karosseriebestandteil (K) wenigstens eine Stützrippe (48; 49) und/oder eine Pufferleiste (28) aufweist.

19. Abdichtungs-Anordnung nach Anspruch 18, **dadurch gekennzeichnet, daß** die bzw. jede Stützrippe (48; 49) mit dem Profilkörper (20) einstückig ist.

20. Abdichtungs-Anordnung nach Anspruch 19, **dadurch gekennzeichnet, daß** zumindest eine Stützrippe (48) die Pufferleiste (28) trägt.

21. Abdichtungs-Anordnung nach einem der Ansprüche 1 bis 20, **dadurch gekennzeichnet, daß** der Profilkörper (20) an seinem oberen Schenkelende (42) mit einer nasenförmigen Verbreiterung (43) oder einem Hinterschnitt versehen ist.

## Claims

1. A sealing assembly for vehicle panes, particularly for the lower region of a motor vehicle windscreen (10), comprising a profiled element (20) for attachment to a lower margin (12) of said windscreen via a bearing surface (23), which profiled element (20) has, in cross-section, the form of a hook and comprises a spring-loaded limb (25) that is adapted to sealing by lock with a fin (16) of a water box cover (14), the profiled element (20) comprising at least one sealing lip (30) adapted to fit between the bottom edge (13) of the windscreen (10) and the upper edge (18) of the water box cover (14) with whose external surfaces (A, G) said lip (30) is substantially flush, wherein the profiled element (20) has a wedge-shaped or supporting rib (21) which forms a resilient clamping and/or bracing element between the lower margin (12) of the windscreen (10) and the recessed fin (16) of the water box cover (14) form which the fin (16) protrudes inwardly and is enclosed, in the locked position, by the spring-loaded limb (25) that protrudes outwardly.

2. A sealing assembly according to claim 1, wherein the sealing lip (30) forms or comprises an at least partially flexibly deformable body shaped to at least partially have a wedge-like or cuboid-like cross-section.

3. A sealing assembly according to claim 1 or claim 2, wherein the sealing lip (30) extends from the profiled element (20) at an angle thereto, in particular protruding outwardly therefrom below the substantially plane bearing surface (23).

4. A sealing assembly according to any one of claims 1 to 3, wherein the sealing lip (30) comprises at least one separate curved or nose-shaped edge (39; 41).

5. A sealing assembly according to any one of claims 1 to 4, wherein the profiled element (20) and/or the sealing lip (30) consist of one or more parts, the profiled element (20) and/or the sealing lip (30) comprising a combination of materials, specifically in the form of a compound of soft and hard materials.

6. A sealing assembly according to any one of claims 1 to 5, wherein the spring-loaded limb (25) is provided with a resilient reinforcing insert (26).

7. A sealing assembly according to claim 6, wherein the supporting rib (21) is substantially wedge-shaped, T-shaped or U-shaped.

8. A sealing assembly according to claim 6 or claim 7, wherein the wedge-shaped or supporting rib (21) includes a plane and/or curved surface (22) with which inner surfaces (32) of the sealing lip (30) are integral or are firmly bonded thereto.

9. A sealing assembly according to any one of claims 6 to 8, wherein the wedge-shaped or supporting rib (21) is provided with a resilient reinforcement (26').

10. A sealing assembly according to any one of claims 6 to 9, wherein the surface (22) of the wedge-shaped or supporting rib (21) carries at least one further sealing lip (40) which bears tightly against the motor vehicle windscreen (10) or the water box cover (14).

11. A sealing assembly according to claim 10, wherein the sealing lips (30, 40) are bonded to each other or form an integral unit.

12. A sealing assembly according to at least one of claims 1 to 11, wherein the bearing surface (23) of the profiled element (20) bears against the windscreen (10) over at least one surface portion (33) having a supporting or adhering layer (36).

13. A sealing assembly according to claim 12, wherein the supporting or adhering layer (36) has or forms an element which is at least in part flexibly deformable.

14. A sealing assembly according to claim 12 or claim 13, wherein the supporting or adhering layer (36) is self-adhesive and/or perforated.

15. A sealing assembly according to any one of claims 12 to 14, wherein the bearing surface (23) of the profiled element (20) comprises vertically spaced contact regions (38) between which the supporting or adhering layer (36) is enclosed.

16. A sealing assembly according to any one of claims 12 to 15, wherein a portion (33) of the surface extends inwardly away from the windscreen (10), preferably by way of a flat recess (34) with which an adhesive tape (36) is in snug contact.

17. A sealing assembly according to any one of claims 12 to 16, wherein the bearing surface (23) of the profiled element (20) is perforated in the at least one surface portion (33), specifically with at least one row of holes (24).

18. A sealing assembly according to any one of claims 1 to 17, wherein the rear of the profiled element (20) has at least one supporting rib (48, 49) and/or a buffer strip (28) for support thereof against a vehicle body part (K).

19. A sealing assembly according to claim 18, wherein the at least one supporting rib (48; 49) is integral with the profiled element (20).

20. A sealing assembly according to claim 19, wherein at least one supporting rib (48) carries said buffer strip (28).

21. A sealing assembly according to any one of claims 1 to 20, wherein the profiled element (20) is provided at its upper limb end (42) with a nose-shaped extension (43) or with an undercut.

## Revendications

1. Ensemble joint d'étanchéité pour vitres de véhicules, en particulier pour la région inférieure d'un pare-brise (10) d'un véhicule automobile, comprenant un élément profilé (20) adapté pour être attaché au bord inférieur (12) dudit pare-brise via une surface d'appui (23), ledit élément profilé (20) présentant une section en forme d'un crochet et comprenant une branche de ressort (25) adaptée pour s'encliqueter sur une nervure (16) du couvercle d'une boîte à eau (14) de manière étanche, ledit élément profilé (20) comportant au moins une lèvre d'étanchéité (30) adaptée pour être intercalée entre l'arête inférieure (13) de la vitre et l'arête supérieure (18) du couvercle de la boîte à eau (14) et essentiellement à fleur de la face extérieure (G) du pare-brise (10) et la face extérieure (A) du couvercle de la boîte à eau (14), l'élément profilé (20) comportant une nervure de calage ou porteuse (21) qui forme un élément élastique de serrage et/ou de support entre le bord inférieur (12) du pare-brise (10) et la nervure (16) du couvercle de la boîte à eau (14), ladite nervure (16) faisant saillie vers l'intérieur par rapport au dernier et étant enfermée en position encliquetée par la branche de ressort (25) qui fait saillie vers l'extérieur.

2. Ensemble joint d'étanchéité selon la revendication 1, **caractérisé en ce que** la lèvre d'étanchéité (30) comporte ou forme un élément au moins partiellement élastiquement déformable qui présente au moins en partie une section cunéiforme ou en forme d'un parallélépipède rectangle.

3. Ensemble joint d'étanchéité selon la revendication 1 ou 2, **caractérisé en ce que** la lèvre d'étanchéité (30) s'étend de l'élément profilé (20) au-dessous de la surface d'appui (23) essentiellement plane du dernier de manière à former un angle avec ledit l'élément profilé (20), en particulier de manière à faire saillie vers l'extérieur.

4. Ensemble joint d'étanchéité selon l'une des revendications 1 à 3, **caractérisé en ce que** la lèvre d'étanchéité (30) comporte au moins un bord courbé ou à nez (39; 41) séparé.

5. Ensemble joint d'étanchéité selon l'une des revendications 1 à 4, **caractérisé en ce que** l'élément profilé (20) et/ou la lèvre d'étanchéité (30) sont constitués d'une seule ou de plusieurs pièces, l'élément profilé (20) et/ou la lèvre d'étanchéité (30) étant composés d'une combinaison de matériaux, notamment en forme d'un composite en matériau souple et matériau dur.

6. Ensemble joint d'étanchéité selon l'une des revendications 1 à 5, **caractérisé en ce que** la branche de ressort (25) est munie d'un insert de renforcement (26) élastique.

7. Ensemble joint d'étanchéité selon la revendication 6, **caractérisé en ce que** la nervure porteuse (21) est essentiellement cunéiforme ou en forme d'un T ou d'un U.

8. Ensemble joint d'étanchéité selon la revendication 6 ou 7, **caractérisé en ce que** la nervure de calage ou porteuse (21) comporte une surface plane et/ou incurvée (22) qui est réalisée en une seule pièce avec des faces intérieures (32) de la lèvre d'étanchéité (30) ou solidement jointe auxdites faces intérieures (32).

9. Ensemble joint d'étanchéité selon l'une des revendications 6 à 8, **caractérisé en ce que** la nervure de calage ou porteuse (21) est munie d'un insert de renforcement (26') élastique.

10. Ensemble joint d'étanchéité selon l'une des revendications 6 à 9, **caractérisé en ce que** la surface (22) de la nervure de calage ou porteuse (21) comporte au moins une autre lèvre d'étanchéité (40) qui s'appuie contre le pare-brise (10) du véhicule automobile ou le couvercle de la boîte à eau (14) de façon à assurer l'étanchéité.

11. Ensemble joint d'étanchéité selon la revendication 10, **caractérisé en ce que** les lèvres d'étanchéité (30, 40) sont jointes l'une à l'autre ou formées en une seule pièce.

12. Ensemble joint d'étanchéité selon au moins l'une des revendications 1 à 11, **caractérisé en ce que** la surface d'appui (23) de l'élément profilé (20) s'appuie, au moins dans une région de surface partielle (33), avec une couche de support ou adhésive (36) contre le pare-brise (10).

13. Ensemble joint d'étanchéité selon la revendication 12, **caractérisé en ce que** la couche de support ou adhésive (36) comporte ou forme un élément au moins partiellement élastiquement déformable.

14. Ensemble joint d'étanchéité selon la revendication 12 ou 13, **caractérisé en ce que** la couche de support ou adhésive (36) est autoadhésive et/ou perforée.

15. Ensemble joint d'étanchéité selon l'une des revendications 12 à 14, **caractérisé en ce que** la surface d'appui (23) de l'élément profilé (20) comporte des régions de contact (38) verticalement décalées les unes par rapport aux autres entre lesquelles la couche de support ou adhésive (36) est intercalée.

16. Ensemble joint d'étanchéité selon l'une des revendications 12 à 15, **caractérisé en ce qu'**une région de surface partielle (33) fait saillie du pare-brise (10) vers l'intérieur, de préférence sous forme d'un creux (34) peu profond, sur laquelle un ruban adhésif (36) s'appuie parfaitement.

17. Ensemble joint d'étanchéité selon l'une des revendications 12 à 16, **caractérisé en ce que** la surface d'appui (23) de l'élément profilé (20) est perforée dans la/chaque région de surface partielle (33), notamment par au moins une ligne de trous (24).

18. Ensemble joint d'étanchéité selon l'une des revendications 1 à 17, **caractérisé en ce que** l'élément profilé (20) comporte sur sa face arrière au moins une nervure de support (48 ; 49) et/ou une moulure antichoc (28) qui repose sur un élément de carrosserie (K).

19. Ensemble joint d'étanchéité selon la revendication 18, **caractérisé en ce que** la/chaque nervure de support (48; 49) est formée en une seule pièce avec l'élément profilé (20).

20. Ensemble joint d'étanchéité selon la revendication 19, **caractérisé en ce qu'**au moins une nervure de support (48) porte la moulure antichoc (28).

21. Ensemble joint d'étanchéité selon l'une des revendications 1 à 20, **caractérisé en ce que** l'élément profilé (20) est muni d'un élargissement (43) en forme de nez ou d'une contre-dépouille sur l'extrémité de sa branche supérieure (42).
